# EUROPÄISCHE PATENTANMELDUNG

(11) **EP 1 314 469 A1**
(43) Veröffentlichungstag der Anmeldung: **28.05.2003**
(21) Anmeldenummer: 02003327.0
(22) Anmeldetag: 13.02.2002
(51) Int. Cl.: B01D 53/047, B01D 53/04

(54) **Adsorberstation und deren Verwendung**

(30) Priorität: 24.10.2001 DE 10152359
(71) Anmelder: Linde Aktiengesellschaft, 65189 Wiesbaden (DE)
(72) Erfinder: Möller, Stefan, 81669 München (DE); Bader, Wolfgang, 82067 Ebenhausen (DE)
(74) Vertreter: Gellner, Bernd, Dr.

(57) **Zusammenfassung**

Die Erfindung betrifft eine Adsorberstation mit einem ersten Adsorber (A) und einem zweiten Adsorber (B). Mit den Adsorbern (A, B) ist eine erste Ringleitung (1) verbunden, die mit Produktgaszuleitungsventilen (4A, 4B) und Regeneriergasableitungsventilen (6A, 6B) versehen ist. Eine zweite mit den Adsorbern (A, B) verbundene Ringleitung (2) weist Produktgasableitungsventile (7A, 7B) und Regeneriergaszuleitungsventile (8A, 8B) auf.

## Beschreibung

Die Erfindung betrifft eine Adsorberstation mit einem ersten Adsorber und einem zweiten Adsorber, wobei der erste und der zweite Adsorber jeweils eine mit einem Produktgaszuleitungsventil versehene Produktgaszuleitung, eine mit einem Produktgasableitungsventil versehene Produktgasableitung, eine mit einem Regeneriergaszuleitungsventil versehene Regeneriergaszuleitung sowie eine mit einem Regeneriergasableitungsventil versehene Regeneriergasableitung besitzen.

Die einer Tieftemperaturluftzerlegungsanlage zugeführte Einsatzluft muss vor der Abkühlung von Wasserdampf und Kohlendioxid befreit werden, um Feststoffausscheidungen im Tieftemperaturteil zu vermeiden. In der Regel werden diese Bestandteile der Einsatzluft vor dem Eintritt in den Hauptwärmetauscher durch Adsorption entfernt. Hierzu werden häufig Adsorber gefüllt mit synthetischen Zeolithen, sogenannte Molekularsiebe, eingesetzt.

Für einen zuverlässigen Betrieb der Molekularsiebe bzw. allgemein von Adsorbem ist es notwendig, diese von Zeit zu Zeit mit einem geeigneten Regeneriergas zu regenerieren. Für einen unterbrechungsfreien Betrieb werden daher mindestens zwei Adsorber benötigt, von denen der eine mit den zu entfernenden Substanzen beladen wird, während der andere regeneriert wird.

Die Verrohrung der mindestens zwei Adsorber weist für jeden Adsorber eine Zu- und eine Ableitung für das zu reinigende Produktgas sowie eine Zu- und eine Ableitung für das Regeneriergas auf. Zudem müssen in den verschiedenen Rohrleitungen entsprechende Ventile angeordnet werden, um die beiden Adsorber zwischen Beladungsbetrieb und dem Regenerierbetrieb umschalten zu können.

Die Größe und Anordnung der Adsorber hängt von zahlreichen Faktoren ab, wie zum Beispiel der Menge, der Temperatur und dem Verunreinigungsgrad des zu verarbeitenden Gases oder den klimatischen Bedingungen am Aufstellungsort. Bisher muss die gesamte Verrohrung und die Anordnung der Umschaltventile an jede Ausführungsform der Adsorbereinheit einzeln angepasst werden.

Aufgabe vorliegender Erfindung ist es daher, eine Verrohrung für die Adsorber zu entwickeln, die bei vielen Ausführungsformen der Adsorber und unter verschiedensten Randbedingungen eingesetzt werden kann.

Diese Aufgabe wird erfindungsgemäß dadurch gelöst, dass eine mit den Adsorbern verbundene und mit den Produktgaszuleitungsventilen und den Regeneriergasableitungsventilen versehene erste Ringleitung und / oder eine mit den Adsorbern verbundene und mit den Produktgasableitungsventilen und den Regeneriergaszuleitungsventilen versehene zweite Ringleitung vorgesehen ist.

Erfindungsgemäß besteht die Verrohrung der Adsorber aus mehreren Modulen, nämlich den Ringleitungen, die je nach Ausführungsart, Größe und Anordnung der Adsorber unterschiedlich kombiniert werden. In der ersten Ringleitung sind bereits die Produktgaszuleitungsventile und die Regeneriergasableitungsventile angeordnet. Die erste Ringleitung umfasst damit alle auf der Produktgaszuführungsseite der Adsorber notwendigen Umschaltventile. Entsprechend sind in die zweite Ringleitung die Produktgasableitungsventile und die Regeneriergaszuleitungsventile integriert.

Bevorzugt ist sowohl eine erste als auch eine zweite Ringleitung vorgesehen. In diesem Fall müssen die beiden Ringleitungen nur noch mit den Adsorbern und den entsprechenden Anschlussleitungen verbunden werden. Alle diese Anschlüsse können durch einfache Verbindungsleitungen, d.h. durch Leitungen, die weder Armaturen noch Instrumentierung oder sonstige An- oder Einbauten aufweisen, hergestellt werden.

Die Regenerierung der Adsorber erfolgt mittels eines warmen, von den zu adsorbierenden Substanzen freien Regeneriergases. Häufig muss das als Regeneriergas eingesetzte Gas vor dem Einleiten in die Adsorber noch angewärmt werden, wozu entsprechende Wärmetauscher oder Erhitzer eingesetzt werden. Außerdem muss der Adsorber nach erfolgter Regenerierung auf seine Betriebstemperatur abgekühlt werden, um beim nachfolgenden Beladen die ordnungsgemäße Funktion zu gewährleisten. Hierzu wird die Temperatur des regenerierten Adsorbers zunächst mit kaltem Regeneriergas abgesenkt, bevor das zu reinigende Produktgas zugeführt wird.

In einer bevorzugten Ausführungsform ist deshalb eine Regeneriergasringleitung vorgesehen, die einen Regeneriergaseinlass, einen Regeneriergasauslass und Mittel zum Erwärmen des Regeneriergases aufweist. Zum Erwärmen des Regeneriergases kommen insbesondere elektrische Erhitzer oder Dampferhitzer in Betracht. In der eigentlichen Regenerierphase wird das Regeneriergas vom Regeneriergaseinlass zum Regeneriergasauslass über den Teil der Regeneriergasringleitung geleitet, der die Mittel zum Erwärmen des Gases beinhaltet. Dagegen strömt das Regeneriergas in der der Regenerierung nachgeschalteten Phase, in der es zum Abkühlen des regenerierten Adsorbers eingesetzt wird, vorzugsweise durch den anderen Regeneriergasringleitungsteil, der als Bypass um die Erwärmungsmittel dient.

Die Ringleitungen, das heißt die erste Ringleitung, die zweite Ringleitung und die Regeneriergasringleitung sind vorzugsweise so ausgeführt, dass diese eine im wesentlichen kreisförmige, ovale oder rechteckige Fläche einschließen. Die Ringleitungen besitzen also jeweils eine einfache geometrische Form, um die Verrohrung möglichst einfach zu halten.

Von Vorteil sind in der ersten Ringleitung und / oder der zweiten Ringleitung und / oder der Regeneriergasringleitung Rohrschalldämpfer eingebaut. Durch das Vorsehen von Rohrschalldämpfern in den Ringleitungen kann auf die sonst üblichen Schallschutzmaßnahmen, wie zum Beispiel Einhausungen, verzichtet werden. Es hat sich gezeigt, dass Rohrschalldämpfer, insbesondere in Kombination mit Isolierungen um die Ringleitungen, einen ausreichenden Schallschutz bieten. Isolierungen um die erste und die zweite Ringleitung sind aber in der Regel ohnehin notwendig, um an der ersten Ringleitung Schwitzwasser zu vermeiden und um die zweite Ringleitung, durch die warmes oder heißes Regeneriergas strömt, zu isolieren.

Die Verrohrung der Adsorber mittels der verschiedenen erfindungsgemäßen Ringleitungen bietet ein flexibles, an unterschiedlichste äußere Bedingungen anpassbares Konzept. Die gesamte Adsorberstation besteht im Idealfall aus fünf Modulen, nämlich den beiden Adsorbern, der ersten und der zweiten Ringleitung sowie der Regeneriergasringleitung, die alle wesentlichen Bauteile beinhalten und nach dem Baukastenprinzip mehr oder weniger beliebig zueinander angeordnet werden können. Beispielsweise können Ringleitungen derselben Bauart für Adsorber unterschiedlicher Größe oder Bauart eingesetzt werden. Lediglich die Anschlussleitungen, die nur als einfache Verbindungsleitungenausgeführt sind, müssen entsprechend geändert werden.

Bei einer Anordnung der Ringleitungen, die sich als besonders günstig erwiesen hat, befindet sich die erste Ringleitung unterhalb und / oder die zweite oberhalb des ersten und des zweiten Adsorbers. In diesem Fall ergibt sich eine äußerst kompakte Adsorberstation. Je nach Ausführung und Anordnung der Adsorber, beispielsweise ob stehend oder liegend, und je nach den Randbedingungen können die Ringleitungen aber auch in anderem Verhältnis zueinander angeordnet werden. Wird die Adsorberstation zum Beispiel in einer Gegend aufgestellt, in der sehr tiefe Temperaturen herrschen, so dass es erforderlich ist, die Ringleitungen zum Schutz vor Witterungseinflüssen einzuhausen, werden die Ringleitungen zweckmäßigerweise direkt nebeneinander oder übereinander angeordnet und gemeinsam eingehaust.

Die Erfindung sowie weitere Einzelheiten der Erfindung werden im Folgenden anhand von in den Zeichnungen dargestellten Ausführungsbeispielen näher erläutert. Hierbei zeigt die
- Figur: schematisch die Verrohrung einer erfindungsgemäßen Molsiebstation.

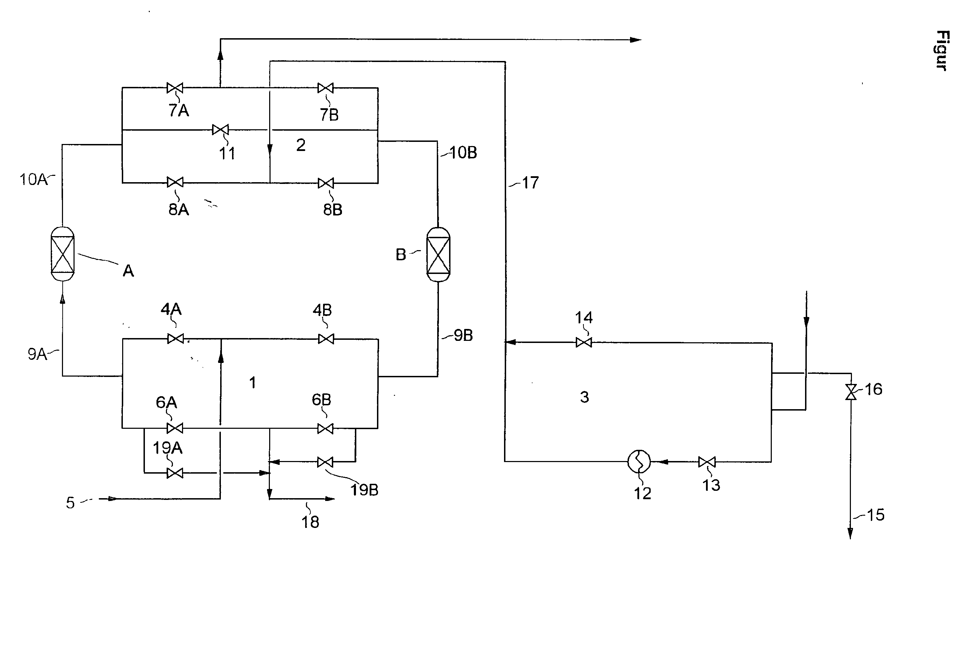

Die in der Figur dargestellte Molsiebstation wird zur Entfernung von Kohlendioxid und Wasserdampf aus der Einsatzluft für eine Tieftemperaturluftzerlegungsanlage eingesetzt. Sie umfasst zwei umschaltbare Molsiebadsorber A und B, die wechselweise mit den zu entfernenden Stoffen beladen beziehungsweise regeneriert werden.

Die Verrohrung der Molsiebstation weist eine erste Ringleitung 1, eine zweite Ringleitung 2 sowie eine Regeneriergasringleitung 3 auf. Die erste Ringleitung 1 ist, wie in der Figur schematisch angedeutet, unterhalb der beiden nebeneinander stehenden Adsorber A, B angeordnet. Die zweite Ringleitung 2 befindet sich oberhalb der Molsiebadsorber A, B, während sich die Regeneriergasringleitung 3 zweckmäßigerweise direkt neben den Adsorbern A, B befindet.

In die erste Ringleitung 1 sind zwei Produktgaszuleitungsventile 4A und 4B integriert, mittels derer der Zustrom der Einsatzluft von der Luftzuleitung 5 zu den Adsorbern A, B geöffnet oder unterbrochen werden kann. Ferner weist die erste Ringleitung 1 zwei Regeneriergasableitungsventile 6A, 6B sowie Druckabbauventile 19A, 19B auf.

Die zweite Ringleitung 2 ist entsprechend mit zwei Produktgasableitungsventilen 7A, 7B sowie zwei Regneriergaszuleitungsventilen 8A, 8B versehen. Zusätzlich ist ein die beiden Produktgasableitungsventile 7A, 7B bzw. die beiden Regneriergaszuleitungsventile 8A, 8B überbrückender Bypass mit einem Druckaufbauventil 11 vorgesehen.

Das der oberen Ringleitung zugeführte Regeneriergas wird zunächst in die Regeneriergasringleitung 3 geleitet, die einen Erhitzer 12 und ein stromabwärts von diesem angeordnetes Ventil 13 sowie ein mit einem Ventil 14 versehenen Bypass um den Erhitzer 12 aufweist. An die Regeneriergasringleitung 3 ist zudem eine mit einem Ventil 16 verschließbare Leitung 15 in die Atmosphäre angeschlossen.

Die gesamte Molsiebstation besteht im wesentlichen aus fünf Bauteilen, nämlich den beiden Molsiebadsorbern A und B, der unteren und der oberen Ringleitung 1, 2 sowie der Regeneriergasringleitung 3. In diese fünf Bauteile sind vorzugsweise alle für die Steuerung und Regelung der Molsiebstation notwendigen Instrumente, Armaturen sowie Ventile und sonstige Einbauten integriert. Die Verbindung dieser Bauteile untereinander erfolgt über einfache Rohrleitungen 9A, 9B, 10A, 10B, 17, die vorzugsweise keine Armaturen, Ventile oder sonstige Einbauten aufweisen.

Im Betrieb der Molsiebstation wird die über Leitung 5 eintretende Einsatzluft zunächst durch den vorher regenerierten Adsorber A geleitet. Hierzu sind das Produktgaszuleitungsventil 4A und das Produktgasableitungsventil 7A geöffnet, während das Produktgaszuleitungsventil 4B und das Produktgasableitungsventil 7B geschlossen sind. Die Einsatzluft durchströmt so nur den Adsorber A, der dabei mit Kohlendioxid und Wasserdampf beladen wird.

Der Adsorber B wird in dieser Zeit regeneriert, das heißt von adsorbiertem Wasser und adsorbiertem Kohlendioxid befreit. Hierzu wird nach Druckabbau über das Ventil 19B trockenes Regeneriergas aus der Tieftemperaturluftzerlegungsanlage abgezogen und der Regeneriergasringleitung 3 zugeführt. Das Ventil 14 ist in diesem Stadium geschlossen, das Ventil 13 geöffnet, so dass das Regeneriergas über den Erhitzer 12 strömt und auf etwa 100 bis 200°C erwärmt wird.

Der Druck in den Adsorbern A, B ist während der Beladungsphase deutlich höher als in der Regenerierungsphase. Zur Vermeidung von Druckstößen wird daher vor dem Einleiten des Regeneriergases in den Adsorber B der Druck in diesem Adsorber B über Ventil 19B abgebaut, indem Leitung 18 geöffnet und Luft in die Umgebung abgeblasen wird.

Nach erfolgtem Druckausgleich strömt das erwärmte Regeneriergas in die obere Ringleitung 2. Die Ventile 8A, 8B, 6A und 6B sind so geschaltet, dass das Regeneriergas nur durch den Adsorber B geleitet wird.

Nach der Regenerierung muss der Adsorber B wieder auf die Betriebstemperatur abgekühlt werden. In der Regeneriergasringleitung 3 wird daher Ventil 13 geschlossen und der Bypass mit dem Ventil 14 geöffnet. Das kalte Regeneriergas aus der Tieftemperaturluftzerlegungsanlage strömt dann direkt in den Adsorber B und bringt diesen auf die erforderliche Betriebstemperatur.

Vor dem Umschalten der beiden Adsorber A, B wird über die Druckaufbauleitung 11 in der oberen Ringleitung der Druck im Adsorber B langsam auf den Betriebsdruck erhöht, um beim Umschalten Druckstöße zu vermeiden.

## Patentansprüche

1. Adsorberstation mit einem ersten Adsorber und einem zweiten Adsorber, wobei der erste und der zweite Adsorber jeweils eine mit einem Produktgaszuleitungsventil versehene Produktgaszuleitung, eine mit einem Produktgasableitungsventil versehene Produktgasableitung, eine mit einem Regeneriergaszuleitungsventil versehene Regeneriergaszuleitung sowie eine mit einem Regeneriergasableitungsventil versehene Regeneriergasableitung besitzen, **dadurch gekennzeichnet, dass** eine mit den Adsorbern (A, B) verbundene und mit den Produktgaszuleitungsventilen (4A, 4B) und den Regeneriergasableitungsventilen (6A, 6B) versehene erste Ringleitung (1) und / oder eine mit den Adsorbem (A, B) verbundene und mit den Produktgasableitungsventilen (7A, 7B) und den Regeneriergaszuleitungsventilen (8A, 8B) versehene zweite Ringleitung (2) vorgesehen ist.

2. Adsorberstation nach Anspruch 1, **dadurch gekennzeichnet, dass** die erste Ringleitung (1) je einen die Regeneriergasableitungsventile (6A, 6B) überbrückenden mit einem Druckabbauventil (19A, 19B) versehenen Bypass aufweist.

3. Adsorberstation nach einem der Ansprüche 1 oder 2, **dadurch gekennzeichnet, dass** die zweite Ringleitung (2) einen die beiden Produktgasableitungsventile (7A, 7B) überbrückenden Bypass aufweist, der mit einem Druckaufbauventil (11) versehen ist.

4. Adsorberstation nach einem der Ansprüche 1 bis 3, **dadurch gekennzeichnet, dass** eine Regeneriergasringleitung (3) mit einem Regeneriergaseinlass, einem Regeneriergasauslass und Mitteln (12) zum Erwärmen eines Regeneriergases vorgesehen ist.

5. Adsorberstation nach einem der Ansprüche 1 bis 4, **dadurch gekennzeichnet, dass** die erste Ringleitung (1) und / oder die zweite Ringleitung (2) und / oder die Regeneriergasringleitung (3) eine kreisförmige, ovale oder rechteckige Fläche einschließen.

6. Adsorberstation nach einem der Ansprüche 1 bis 5, **dadurch gekennzeichnet, dass** in der ersten Ringleitung (1) und / oder der zweiten Ringleitung (2) und / oder der Regeneriergasringleitung (3) Rohrschalldämpfer eingebaut sind.

7. Adsorberstation nach einem der Ansprüche 1 bis 6, **dadurch gekennzeichnet, dass** sich die erste Ringleitung (1) unterhalb und / oder die zweite Ringleitung (2) oberhalb des ersten und des zweiten Adsorbers (A, B) befinden.

8. Adsorberstation nach einem der Ansprüche 1 bis 6, **dadurch gekennzeichnet, dass** die erste und die zweite Ringleitung (1, 2) nebeneinander oder übereinander neben den Adsorbern (A, B) angeordnet werden.

9. Adsorberstation nach einem der Ansprüche 1 bis 8, **dadurch gekennzeichnet, dass** die die Ringleitungen (1, 2, 3) verbindenden Rohrleitungen keine Armaturen oder Instrumentierung aufweisen.

10. Adsorberstation nach einem der Ansprüche 1 bis 9, **dadurch gekennzeichnet, dass** der erste und der zweite Adsorber (A, B) Molekularsiebadsorber sind.

11. Verwendung einer Adsorberstation nach einem der Ansprüche 1 bis 10 zur Entfernung von Wasser und Kohlendioxid aus Einsatzluft in einer Tieftemperaturluftzerlegungsanlage.
